(19) Europäisches Patentamt

European Patent Office

Office européen des brevets

(11) Veröffentlichungsnummer: **0 444 274 B1**

(12) **EUROPÄISCHE PATENTSCHRIFT**

(45) Veröffentlichungstag der Patentschrift: **03.05.95**

(51) Int. Cl.⁶: **C08G 61/02**, C08L 65/00

(21) Anmeldenummer: **90124289.1**

(22) Anmeldetag: **15.12.90**

(54) **Verfahren zur Herstellung von Phenolharzen.**

(30) Priorität: **27.02.90 DE 4006130**

(43) Veröffentlichungstag der Anmeldung:
**04.09.91 Patentblatt 91/36**

(45) Bekanntmachung des Hinweises auf die
Patenterteilung:
**03.05.95 Patentblatt 95/18**

(84) Benannte Vertragsstaaten:
**DE FR GB**

(56) Entgegenhaltungen:
EP-A- 0 075 771
CH-A- 218 075
DE-A- 1 495 710
DE-C- 945 291
US-A- 3 644 537

ANGEWANDTE MAKROMOLEKULARE CHE-
MIE. Bd. 90, Nr. 1375, 1980, BASELCH Seiten
201 - 210; PATEL,R.ET AL.: 'Synthesis and
Thermal Stability ofPhenol-1,2-dichloroetha-
ne Resins'

(73) Patentinhaber: **BAYER AG**

**D-51368 Leverkusen (DE)**

(72) Erfinder: **Abele, Manfred**
**Am Boerschsgarten 16**
**W-5000 Köln 90 (DE)**
Erfinder: **Buysch, Hans-Josef, Dr.**
**Brandenburger Strasse 28**
**W-4150 Krefeld (DE)**
Erfinder: **Schrage, Heinrich, Dr.**
**Doerperhofstrasse 31**
**W-4150 Krefeld 1 (DE)**
Erfinder: **Vernaleken, Hugo, Dr.**
**Kreuzbergstrasse 147**
**W-4150 Krefeld (DE)**

**Beschreibung**

Die Erfindung betrifft ein Verfahren zur Herstellung von Novolak-artigen Phenolharzen durch Umsetzung von Phenolen mit Gemischen wenigstens teilweise chlorsubstituierter $C_4$- bis $C_8$-Kohlenwasserstoffe in Gegenwart von Eisen-Katalysatoren.

Novolake sind bekanntlich schmelzbare, in einer Reihe organischer Lösungsmittel lösliche, nicht-selbsthärtende Polyphenole, deren aromatische Kerne durch Alkylidengruppen verknüpft sind. Sie können aus Phenolen und Ketoverbindungen in Gegenwart saurer Katalysatoren hergestellt werden, wobei man üblicherweise ein Molverhältnis Ketoverbindung/Phenol von maximal 1, vorzugsweise von maximal 0,75, einhält; vgl. "Methoden der Organischen Chemie" (Houben-Weyl), Bd. 14/2, Georg Thieme Verlag, Stuttgart 1963, S. 193 f Unter "Novolak-artigen Phenolharzen" im Sinne der Erfindung sollen Phenolharze verstanden werden, deren verknüpfende Glieder nicht auf Alkylidengruppen beschränkt sind, die aber im wesentlichen frei von zur Selbstvernetzung befähigten Gruppen - hauptsächlich also frei von Hydroxymethylgruppen - sind.

Im Verlauf der Chloroprenherstellung durch Chlorierung von Butadien entstehen neben Chloropren unerwünschte Nebenprodukte mit 4 bis 8, vorzugsweise 4 oder 8, C-Atomen und mindestens 3, vorzugsweise mindestens 4 funktionellen Gruppen aus der Reihe bestehend aus Chloratomen und C = C-Doppelbindungen. Typische Nebenprodukte bestehen aus Mischungen aus 20 bis 60 Gew.-% 1,2,3,4-Tetrachlorbutan, 10 bis 60 Gew.-%- Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachloroctanen. Die saubere Trennung der einzelnen Komponenten aus diesen Mischungen durch Destillation ist aufgrund der nahe beieinander liegenden Siedepunkte nicht möglich; aus diesem Grund wurden die Nebenprodukte bislang nicht weiterverwendet, sondern verbrannt.

Aufgabe der Erfindung war es daher, die wirtschaftlich und ökologisch unerwünschte Verbrennung zu vermeiden und alle Komponenten der Nebenproduktgemische in wertvollere Produkte zu überführen.

Überraschenderweise wurde nun gefunden, daß sich für eine Umsetzung der beschriebenen Nebenprodukte mit Phenolen Eisenkatalysatoren insofern hervorragend eignen als sie - soweit feststellbar - die Reaktion jeder Nebenproduktkomponente, auch die des wenig reaktiven Tetrachlorbutans, katalysieren, so daß das erhaltende Phenolharz nach Abtrennung des überschüssigen Phenols und gegebenenfalls von Lösungsmittel ohne Rücksicht auf seine heterogenen Bausteine unter Verzicht auf aufwendige Reinigungsschritte weiterverarbeitet werden kann, z.B. als verstärkende Komponente in zu vulkanisierenden Kautschukmassen.

Zwar war die Umsetzung von ungesättigten Kohlenwasserstoffen mit Phenolen zu Phenolharzen aus der US-PS 3 644 537 bekannt; allerdings bestand dort weder das Problem, Mischungen verschiedener Komponenten umzusetzen, noch werden dort Eisenkatalysatoren überhaupt erwähnt.

Gegenstand der Erfindung ist also ein Verfahren zur Herstellung von Novolak-artigen Phenolharzen durch Umsetzung von A) Phenolen mit B) Gemischen zumindest teilchlorierter, teilweise ungesättigter $C_4$-$C_8$-Kohlenwasserstoffe, die bei der Chloroprenherstellung durch Chlorierung von Butadien als Nebenprodukt entstehen und Mischungen aus 20 bis 60 Gew.-% 1,2,3,4-Tetrachlorbutan, 10 bis 60 Gew.-%-Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachloroctanen enthalten, in Gegenwart von metallischem Eisen und/oder Verbindungen des 2- und 3-wertigen Eisens als Katalysatoren.

Für das erfindungsgemäße Verfahren bevorzugte Phenole A umfassen ein- und zweiwertige einkernige Phenole, die neben den phenolischen Hydroxylgruppen keine anderen Substituenten aufweisen, wie unsubstituiertes Phenol selbst, Brenzcatechin, Resorcin, Hydrochinon; einwertige $C_1$-$C_6$-Alkylphenole wie Kresole, Xylenole, Ethylphenole, Hexylphenole; einwertige Phenylphenole wie Hydroxybiphenyle; ein- und zweikerige $C_6$-$C_{18}$-Bisphenole wi Dihydroxybiphenyle, Bis-(4-hydroxyphenyl)-methan, 2,2-Bis-(4-hydroxyphenyl)-propan und Bis-(4-hydroxyphenyl)-sulfid.

Der Chlorgehalt der Gemische B beträgt in der Regel 40 bis 70, vorzugsweise 45 bis 60, Gew.-%, bezogen auf Gemisch B.

Für das erfindungsgemäße Verfahren werden die Ausgangsprodukte in der Regel entsprechend einem Äquivalentverhältnis von phenolischem OH zu funktionellen Gruppen der Nebenproduktkomponenten (Chlor bzw. C = C-Doppelbindung) von 1:10 bis 10:1, vorzugsweise 1:4 bis 8:1, insbesondere 1:2 bis 5:1, eingesetzt.

Bevorzugte Eisenkatalysatoren umfassen metallisches Eisen sowie Verbindungen des Eisens, vorzugsweise des 2- und 3-wertigen Eisens, wie z.B. die Bromide, die Nitrate, die Sulfate, die Oxalate, insbesondere die Chloride. Die Katalysatormenge beträgt im allgemeinen 0,05 bis 10, vorzugsweise 0,1 bis 3 Gew.-%, bezogen auf Gemische eingesetzter Kohlenwasserstoffe B.

Vorzugsweise wird das erfindungsgemäße Verfahren in Abwesenheit von Lösungsmitteln durchgeführt. Es ist jedoch ohne weiteres möglich, unter Reaktionsbedingungen inerte organische Lösungsmittel, vorzugsweise solche mit einem Siedepunkt über 120, insbesondere über 180°C, wie Nitrobenzol, Dichlorbenzole, Benzonitril, Chlornaphthaline mitzuverwenden. Falls man das Verfahren in Lösung durchführen möchte, wird man das organische Lösungsmittel in Mengen von 5 bis 100 Gew.-%, bezogen auf die Summe von Phenol A und Gemisch B, einsetzen.

Das erfindungsgemäße Verfahren ist exotherm und kann deshalb, sobald es in Gang gekommen ist, ohne Wärmezufuhr von außen ablaufen. Um einen möglichst vollständigen Reaktionsablauf und damit einen möglichst geringen Chlorgehalt des Endprodukts zu erreichen, kann es sinnvoll sein, das Reaktionsgemisch nach Beendigung der Zugabe der Komponenten noch 2 bis 20 Stunden bei Temperaturen von 40 bis 280, vorzugsweise 80 bis 250, insbesondere 120 bis 200°C zu belassen; das Ende der Reaktion läßt sich an der Beendigung der Chlorwasserstoffentwicklung ablesen.

Praktisch läßt sich das erfindungsgemäße Verfahren beispielsweise so durchführen, daß man das geschmolzene Phenol A und den Katalysator vorlegt und das Gemisch B, gegebenenfalls gelöst in organischem Lösungsmittel, zudosiert. Um eine gute Durchmischung der Komponenten zu erreichen, kann man rühren. Nach beendeter Reaktion kann man Lösungsmittel (falls vorhanden) und überschüssiges Phenol abtrennen, vorzugsweise durch Destillation, gegebenenfalls bei vermindertem Druck. Das hierbei gewonnene Destillat kann für weitere Umsetzungen wiederverwendet werden.

Die erfindungsgemäß hergestellten Phenolharze enthalten pro Mol aus Phenol A stammender Einheit 0,2 bis 1, vorzugsweise 0,4 bis 0,8 Mol aus Gemisch B stammende Einheiten.

Die erfindungsgemäß hergestellten Phenolharze besitzen im allgemeinen Erweichungspunkte (nach DIN 53 244) von 50 bis 200°C, OH-Zahlen von 100 bis 550 und als Zahlenmittel $\overline{M}_n$ bestimmte Molekulargewichte von 250 bis 2000 (dampfdruckosmometrisch in Methanol und in Aceton bestimmt, wobei der niedrigere Wert als der korrekte angesehen wird).

Die erfindungsgemäßen hergestellten Phenolharze eignen sich als Verstärkerharzkomponente für zu vulkanisierende Kautschukmassen. Diesen Kautschukmassen können Natur-und Synthesekautschuke zugrundeliegen.

Bevorzugte Synthesekautschuke sind beispielsweise bei W.Hofmann, Kautschuk-Technologie, Gentner Verlag, Stuttgart 1980, beschrieben. Sie umfassen u.a.

BR - Polybutadien

ABR - Butadien/Acrylsäure-$C_1$-$C_4$-alkylester-Copolymerisate mit Acrylester-Gehalten von 5 bis 60, vorzugsweise von 15 bis 50 Gew.-%

CR - Polychloropren

IR - Polyisopren

IIR - Isobutylen/Isopren-Copolymerisate

SBR - Styrol/Butadien-Copolymerisate mit Styrolgehalten von 1 bis 60, vorzugsweise von 20 bis 50 Gew.-%

NBR - Butadien/Acrylnitril-Copolymerisate mit Acrylnitrilgehalten von 5 bis 60, vorzugsweise 10 bis 50 Gew.-%

EPDM - Ethylen/Propylen/Dien-Copolymerisate

und Mischungen dieser Kautschuke. Die für das erfindungsgemäße Verfahren zu verwendenden Kautschuke besitzen Glasübergangstemperaturen unter 20°C, vorzugsweise unter 0°C, bestimmt im Torsionsschwingungsversuch nach DIN 53 445. Die Dosierung der Phenolharze kann 1 bis 50, vorzugsweise 3 bis 15, Gew.-%, bezogen auf Kautschuk, betragen.

Da die erfindungsgemäß hergestellten Phenolharze nicht selbsthärtend sind, bedarf es zu ihrer Härtung - wie bei den Novolaken - eines Zusatzes von Formaldehyd, Formaldehyd abspaltenden Verbindungen wie Hexamethylentetramin oder Methylolgruppen enthaltenden Melamin- oder Harnstoffkondensaten, wobei diese Härter in der Regel in Mengen von 2,5 bis 50, vorzugsweise 5 bis 15 Gew.-%, bezogen auf Phenolharz, eingesetzt werden. Werden die Phenolharze gehärtet und der sie umgebende Kautschuk vulkanisiert, so ist anzunehmen, daß vernetzte Systeme im Sinne von sog. Interpenetrating Networks entstehen. Dabei ist dann davon auszugehen, daß das erfindungsgemäß hergestellte Phenolharz nicht Teil des für den Kautschuk notwendigen Vulkanisiersystems ist.

Die Verwendung dieser Harzsysteme in Kautschukmassen führt zur Verbesserung einiger wichtiger mechanischer Eigenschaften der daraus hergestellten Vulkanisate, wie z.B. der Härte und der Spannungswerte. Die Einarbeitung der Verstärkerharze kann mittels der für die Herstellung von Kautschukmischungen üblichen Einrichtungen, z.B. mit Innenmischern und Walzwerken erfolgen. Bei hohen Mischungstemperaturen (Innemischer) sollten zur Erzielung einer möglichst hohen Vulkanisathärte Verstärkerharz und Härter zur Vermeidung von vorzeitigen Reaktionen getrennt eingearbeitet werden. Hierbei ist es angezeigt, den Härter erst gegen Ende der Mischungsherstellung bei möglichst niedriger Mischungstemperatur (max. ca. 100°C) einzumischen.

Die erfindungsgemäßen Harze können zur Herstellung von technischen Gummiwaren, z.B. Walzen, Dichtungen, Bodenbeläge, eingesetzt werden.

Die Prozentangaben der nachfolgenden Beispiele beziehen sich jeweils auf das Gewicht; Teile sind Gewichtsteile.

Beispiele

Als "Produktgemisch" wird in den folgenden Beispielen eine Mischung von bei der Butadienchlorierung anfallenden Nebenprodukten mit einem Chlorgehalt von 54 % und einem C=C-Doppelbindungsgehalt von 0,575 Mol Doppelbindungen pro 100 g Produkt eingesetzt. Das Produktgemisch bestand zu 35 % aus Tetrachlorbutan, 40 % Dichloroctadienen, 7 % Trichlorbutenen, 8 % Tetrachloroctenen und 10 % anderen Produkten in geringeren Anteilen.

Beispiel 1

Zu einer Schmelze von 400 g Phenol und 4 g wasserfreiem Eisenchlorid wurden bei 60°C 200 g Produktgemisch zugetropft, wobei sich die Reaktionsmischung auf ca. 80°C erwärmte. Anschließend wurde noch 6 Stunden auf 182°C erwärmt und das überschüssige Phenol abdestilliert. Als Rückstand verblieben 250 g Phenolharz vom Erweichungspunkt 105°C; OH-Zahl: 240.

Beispiel 2

Zu einer Schmelze von 460 g Kresol und 4 g wasserfreiem Eisenchlorid wurden bei 60°C 200 g Produktgemisch zugetropft, wobei sich die Reaktionsmischung auf ca. 80°C erwärmte. Anschließend wurde noch 6 Stunden auf 193°C erwärmt und das überschüssige Kresol abdestilliert. Als Rückstand verblieben 265 g Phenolharz vom Erweichungspunkt 110°C; OH-Zahl 211.

Beispiel 3

Zu einer Schmelze von 470 g Resorcin und 4 g wasserfreiem Eisenchlorid wurden bei 110°C 200 g Produktgemisch zugetropft. Anschließend wurde noch 6 Stunden auf 200°C erwärmt und das überschüssige Resorcin abdestilliert. Als Rückstand verblieben 405 g Phenolharz vom Erweichungspunkt 65°C; OH-Zahl: 370.

Beispiel 4

Zu einer Schmelze von 500 g Bisphenol A und 4 g wasserfreiem Eisenchlorid wurden bei 140°C 200 g Produktgemisch zugetropft. Anschließend wurde noch 6 Stunden auf 200°C erwärmt und das überschüssige Bisphenol abdestilliert. Als Rückstand verblieben 373 g Phenolharz vom Erweichungspunkt 120°C; OH-Zahl: 220.

Beispiel 5

Zu einer Schmelze von 200 g Phenol und 2 g wasserfreiem Eisenchlorid wurden bei 60°C 200 g Produktgemisch zugetropft, wobei sich die Reaktionsmischung auf ca. 80°C erwärmte. Anschließend wird noch 6 Stunden auf 182°C erwärmt und das überschüssige Phenol abdestilliert. Als Rückstand verblieben 215 g Phenolharz vom Erweichungspunkt 130°C; OH-Zahl: 190.

Anwendung

Die folgenden Versuche dienen zur Erläuterung des Einsatzes der erfindungsgmäß hergestellten Phenolharze als Verstärkerharze für Kautschukmassen bzw. deren Vulkanisate.

Hierfür wurde folgende Prüfmischung verwendet, die zweistufig hergestellt wurde. Der erste Teil der Mischungsherstellung wurde in einem Innenmischer (Kneter) durchgeführt. Hierbei wurden folgende Bestandteile gemischt (in Teilen):

| | |
|---|---|
| Naturkautschuk (Typ SMR 5) | 75,0 |
| Polybutadien | 25,0 |
| Stearinsäure | 2,0 |
| Zinkoxid | 5,0 |
| Verstärkerharz (vgl. Tabelle) | 7,5 |
| Ruß N 326 | 70,0 |
| N-Isoproyl-N'-phenyl-p-phenylen-diamin (IPPD) | 1,5 |
| 2,2,4-Trimethyl-1,2-dihydrochinolin, polymerisiert (TMQ) | 1,0 |
| | **187,0** |

Nach einer Mischzeit von 5 Minuten wurde der Innenkneter entleert und die Teilmischung auf einem nachgeschalteten Walzwerk nach folgender Rezeptur fertiggemischt (in Teilen):

| | |
|---|---|
| Teilmischung | 187,0 |
| Schwefel | 2,5 |
| Benzothiazyl-2-sulfenmorpholid | 1,5 |
| N-Cyclohexyl-thiophthalimid | 0,3 |
| Hexamethylentetramin | 0,76 |

Die Vulkanisation der fertigen Mischungen erfolgte während 30 Minuten bei 150°C.

In der folgenden Tabelle werden die Ergebnisse der Vulkanisatprüfung aufgeführt. Die Ergebnisse der Vulkanisatprüfungen lassen erkennen, daß die erfindungsgemäß hergestellten Harze eine ausgezeichnete verstärkende Wirkung aufweisen.

Vulkanisate, verstärkt mit verschiedenen Harzen

| Prüfungen | Vergleich 1 Verstärkerharz-freies Vulkanisat | Vergleich 2 handelsüblicher Novolak* | Harz aus Beispiel 1 |
|---|---|---|---|
| Reißfestigkeit (MPa) | 19,4 | 16,2 | 16,5 |
| Bruchdehnung (%) | 332 | 300 | 370 |
| Spannungswert bei 100 % Dehnung (MPa) | 4,4 | 5,7 | 5,2 |
| Härte (Shore A) bei 23°C | 77 | 90 | 90 |
| bei 70°C | 72 | 87 | 87 |
| Rückprallelastizität (%) bestimmt bei 23° | 43 | 40 | 40 |
| 70°C | 53 | 46 | 43 |

*) Phenol/Formaldehyd-Kondensat, ®Vulkadur RB der Bayer AG

**Patentansprüche**

1. Verfahren zur Herstellung von Novolak-artigen Phenolharzen durch Umsetzung von A) Phenolen mit B) Gemischen zumindest teilchlorierter, teilweise ungesättigter $C_4$-$C_8$-Kohlenwasserstoffe, die bei der Chloroprenherstellung durch Chlorierung von Butadien als Nebenprodukt entstehen und Mischungen aus 20 bis 60 Gew.-% 1,2,3,4-Tetrachlorbutan, 10 bis 60 Gew.-%-Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachloroctanen enthalten, in Gegenwart von metallischem Eisen und/oder Verbindungen des 2- und 3-wertigen Eisens als Katalysatoren.

2. Verfahren nach Anspruch 1, wobei als Katalysator Eisen(III)-chlorid eingesetzt wird.

3. Verfahren nach Anspruch 1, wonach die Komponenten A und B in einem Äquivalentverhältnis phenolisches OH zu funktionellen Gruppen des Gemisches B von 1:10 bis 10:1 eingesetzt werden.

4. Verfahren nach Anspruch 1, wonach die Reaktionstemperatur 40 bis 280°C beträgt.

**Claims**

1. Process for the production of novolac type phenolic resins by the reaction of A) phenols with B) mixtures of at least partially chlorinated, partially unsaturated $C_4$-$C_8$ hydrocarbons which arise as a by-product of chloroprene production by chlorination of butadiene and contain mixtures of 20 to 60 wt.% of 1,2,3,4-tetrachlorobutane, 10 to 60 wt.% of dichlorooctadienes, 3 to 20 wt.% of trichlorobutenes, 2 to 8 wt.% of tetrachlorooctenes and up to 15 wt.% of dichlorobutenes, dichlorobutanes and hexachlorooctanes, in the presence of metallic iron and/or compounds of di- and trivalent iron as catalysts.

2. Process according to claim 1, wherein iron(III) chloride is used as the catalyst.

3. Process according to claim 1, in which components A and B are used in an equivalent ratio of phenolic OH groups to functional groups in mixture B of from 1:10 to 10:1.

4. Process according to claim 1, in which the reaction temperature is from 40 to 280°C.

**Revendications**

1. Procédé de préparation de résines phénoliques du genre novolaque par réaction de A) des phénols avec B) des mélanges d'hydrocarbures en $C_4$-$C_8$ dont certains insaturés, chlorés en partie au moins, obtenus en produits d'accompagnement à la fabrication du chloroprène par chloruration du butadiène, et qui contiennent des mélanges de 20 à 60 % en poids de 1,2,3,4-tétrachlorobutane, 10 à 60 % en poids de dichlorooctadiènes, 3 à 20 % en poids de trichlorobutènes, 2 à 8 % en poids de tétrachlorooctènes et jusqu'à 15 % en poids de dichlorobutènes, dichlorobutanes et hexachlorooctanes, en présence de fer métallique et/ou de composés du fer divalent et trivalent qui servent de catalyseurs.

2. Procédé selon revendication 1, dans lequel on utilise en tant que catalyseur le chlorure ferrique.

3. Procédé selon revendication 1, dans lequel les composants A et B sont utilisés en proportions relatives correspondant à un rapport de 1 : 10 à 10 : 1 entre les équivlents de groupes OH phénoliques et les équivalents de sites fonctionnels du mélange B.

4. Procédé selon revendication 1, dans lequel la température de réaction est de 40 à 280°C.